# EUROPEAN PATENT APPLICATION

(11) **EP 4 620 961 A1**
(43) Date of publication of application: **24.09.2025**
(21) Application number: 23891366.9
(22) Date of filing: 02.11.2023
(51) Int. Cl.: C07F 7/18

(54) **METHOD FOR PRODUCING DISILOXANE COMPOUND**

(30) Priority: 17.11.2022 JP 2022184268
(71) Applicant: SHIN-ETSU CHEMICAL CO., LTD., Tokyo 1000005 (JP)
(72) Inventor: KUROSU Satoshi, Joetsu-shi, Niigata 942-8601 (JP); NYUUGAKU Takeshi, Joetsu-shi, Niigata 942-8601 (JP)
(74) Representative: Mewburn Ellis LLP
(86) International application number: PCT/JP2023/039539
(87) International publication number: WO 2024/106213

(57) **Abstract**

This method for producing a disiloxane compound makes it possible to highly selectively provide a disiloxane compound while suppressing generation of VOCs, the disiloxane compound being represented by general formula (5) 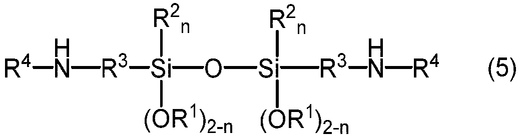 [R¹ and R² represent a monovalent hydrocarbon group, R³ represents a divalent hydrocarbon group, and R⁴ represents a monovalent hydrocarbon group or the like] in which a cyclic silazane compound represented by general formula (1) 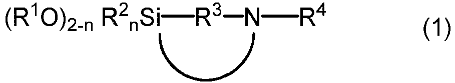 (where R¹, R², R³, R⁴, and n represent the same as above) is subjected to hydrolysis condensation.

## Description

### TECHNICAL FIELD

The present invention relates to a method for preparing a disiloxane compound.

### BACKGROUND ART

Organosilicon compounds having hydrolyzable silyl groups and organic groups make it possible to join together organic materials and inorganic materials which would normally be difficult to join, this being achieved by the formation of covalent bonds between silanol groups created by hydrolysis of the hydrolyzable silyl groups and hydroxyl groups on the surface of the inorganic material and by the organic groups reacting with the organic material. In this way, organic-inorganic composite materials can be conferred with such properties as heat resistance, water resistance, weather resistance, increased mechanical strength, adhesion, dispersibility, water repellency and corrosion resistance.

By virtue of these properties, such organosilicon compounds are employed in a broad range of fields and applications, including silane coupling agents, resin additives, surface treatment agents, textile treatments, adhesives, paint additives and polymer modifiers.

Even among such organosilicon compounds, those siloxane compounds which have a plurality of alkoxy groups are capable of increasing the adhesion of organic-inorganic composite materials owing to the formation of a plurality of silanol groups by hydrolysis reactions. Disiloxane compounds can be expected to increase adhesion because they have a higher number of alkoxy groups than the corresponding monomers.

Examples of such disiloxane compounds include the 1,3-bis(2-methylpropyl)-1,1,3,3-tetramethoxydisiloxane disclosed in Patent Document 1.

### PRIOR ART DOCUMENTS

### PATENT DOCUMENT

Patent Document 1: EP 0579453 A1

### SUMMARY OF INVENTION

### TECHNICAL PROBLEM

However, the method disclosed in Patent Document 1 for preparing a disiloxane compound by the hydrolytic condensation of an alkoxysilane compound, given the difficulty of controlling the silanol condensate by way of the hydrolytic condensation reaction, is unable to produce a disiloxane compound in a high yield. That is, in the above hydrolytic condensation reaction on an alkoxysilane compound, not only does a disiloxane or trisiloxane compound form, polysiloxane compounds in which the condensation reaction has proceeded even further also end up forming. It is thus difficult to obtain a specific siloxane compound in a high yield.

Moreover, a large amount of volatile organic compound (VOC) is emitted due to hydrolysis of the alkoxy group, raising concerns over the environmental impact.

Hence, there exists a desire for a method which is capable of very selectively preparing a disiloxane compound while suppressing VOC emissions.

The present invention was arrived at in light of the above circumstances. The object of this invention is to provide a method for preparing disiloxane compounds which is capable of suppressing VOC emissions and can obtain a disiloxane compound to a high selectivity.

### SOLUTION TO PROBLEM

The inventors have conducted intensive investigations aimed at achieving the above objects, as a result of which they have discovered that by carrying out a hydrolytic condensation reaction on a cyclic silazane compound, VOC emissions are suppressed and a disiloxane compound can be prepared to a high selectivity. This discovery ultimately led to the present invention.

Accordingly, the invention provides:
1. A method for preparing a disiloxane compound, which method includes the step of hydrolytically condensing a cyclic silazane compound of general formula (1) below 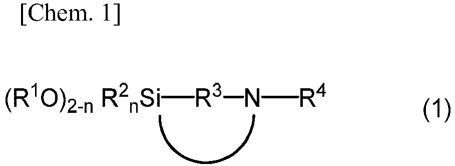
   [wherein R¹ and R² are each independently a substituted or unsubstituted monovalent hydrocarbon group of 1 to 10 carbon atoms; R³ is an unsubstituted divalent hydrocarbon group of 1 to 10 carbon atoms which may include a nitrogen atom or a sulfur atom; R⁴ is a substituted or unsubstituted monovalent hydrocarbon group of 1 to 20 carbon atoms, a substituent of general formula (2) below
      [Chem. 2]

      -R⁵-SiR²_{n'}(OR¹)_{3-n'} (2)
   (wherein R¹ and R² are as defined above, R⁵ is an unsubstituted divalent hydrocarbon group of 1 to 10 carbon atoms, and n' is an integer from 0 to 2), a substituent of general formula (3) below 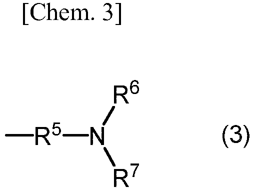
   (wherein R⁵ is as defined above; R⁶ is a substituted or unsubstituted monovalent hydrocarbon group of 1 to 10 carbon atoms which may include a nitrogen atom or an oxygen atom; R⁷ is a hydrogen atom, an oxy radical, a hydroxyl group, an unsubstituted alkoxy group of 1 to 10 carbon atoms, or a substituted or unsubstituted monovalent hydrocarbon group of 1 to 10 carbon atoms which may include a nitrogen atom or an oxygen atom; and R⁵ and R⁶ or R⁶ and R⁷ may respectively bond to each other and form a ring together with the nitrogen atom to which they are bonded) or a substituent of general formula (4) below 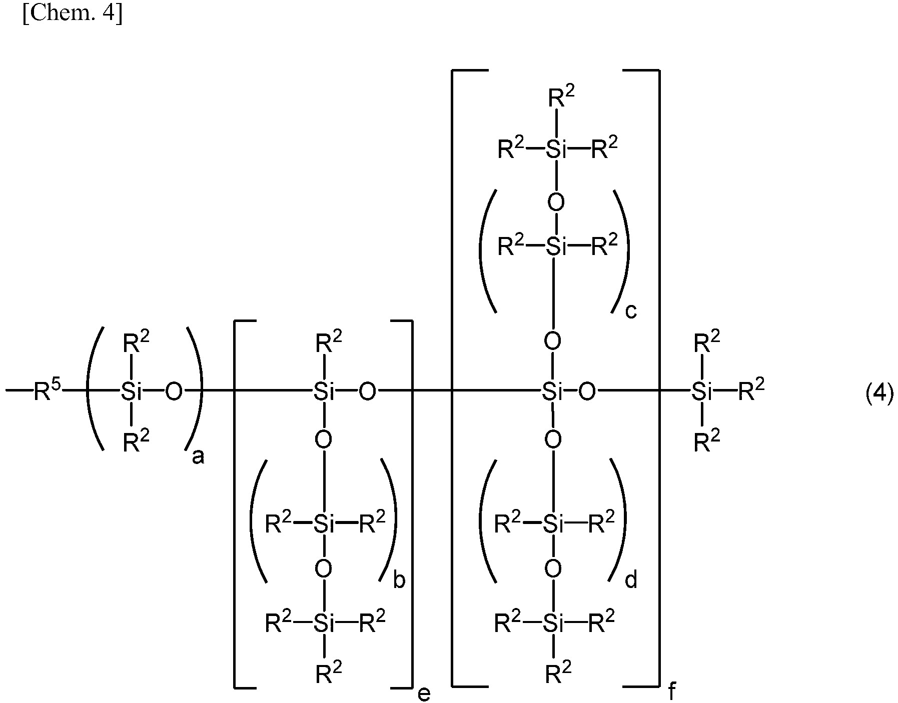
   (wherein R² and R⁵ are as defined above and a, b, c, d, e and f are integers which respectively satisfy the conditions 0 ≤ a ≤ 10, 0 ≤ b ≤ 8, 0 ≤ c ≤ 7, 0 ≤ d ≤ 7, 0 ≤ e ≤ 5, 0 ≤ f ≤ 3 and 0 ≤ a + (b+2)e + (c+d+3)f ≤ 10); and n is 0 or 1] to form a disiloxane compound of general formula (5) below 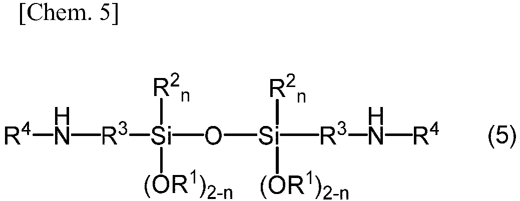
   (wherein R¹, R², R³, R⁴ and n are defined above);
2. The method for preparing a disiloxane compound of 1 above, wherein the hydrolytic condensation is carried out within at least one type of solvent selected from the group consisting of ketone solvents, ether solvents, ester solvents and aprotic polar solvents;
3. The method for preparing a disiloxane compound of 1 or 2 above, wherein the hydrolytic condensation is carried out in the presence of at least one type of acid catalyst selected from the group consisting of hydrochloric acid, sulfuric acid, nitric acid, phosphoric acid, carboxylic acid compounds and sulfonic acid compounds; and
4. The method for preparing a disiloxane compound of 1 or 2 above, wherein the hydrolytic condensation is carried out in the presence of at least one type of basic catalyst selected from the group consisting of alkali metal hydroxides, alkali metal alkoxides, quaternary ammonium hydroxide compounds, alkylamine compounds and cyclic amidine compounds.

### ADVANTAGEOUS EFFECTS OF INVENTION

This invention makes it possible to prepare a disiloxane compound to a high selectively while suppressing VOC emissions.

### DESCRIPTION OF EMBODIMENTS

The invention is described more fully below.

In this invention, a cyclic silazane compound of general formula (1) below (referred to below as "Compound (1))" is hydrolytically condensed, producing a disiloxane compound of general formula (5) below (referred below as "Compound (5)").

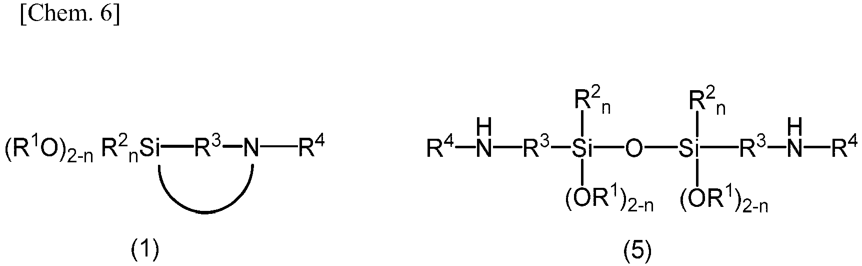

Compound (1) is characterized in that the Si-N bond has a bond energy of 100 kcal/mol, which is smaller than the bond energy of 110 kcal/mol for a Si-O bond, and also in that, due to ring strain, it reacts with compounds having an active proton, such as an alcohol or water, and readily undergoes ring opening.

Hence, the reaction of the invention proceeds according to the following scheme.

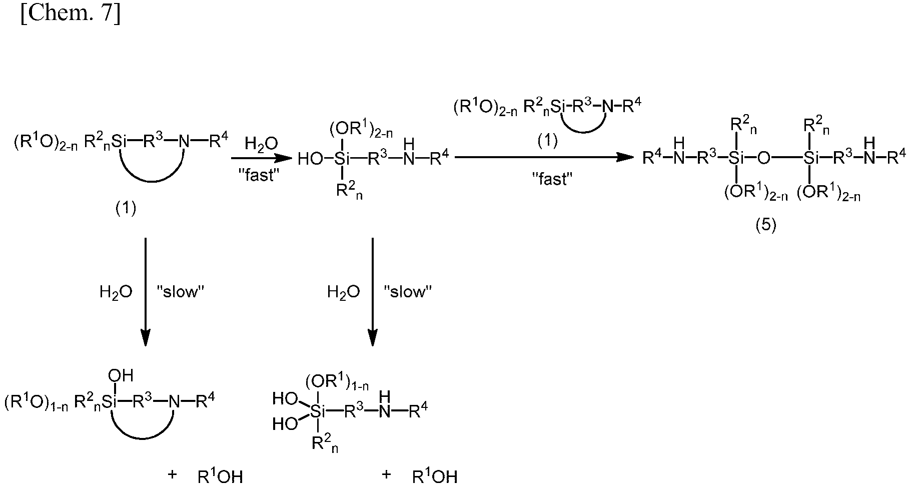

The silanol that has formed when a molecule of Compound (1) rapidly reacts with water and undergoes ring opening rapidly reacts in turn with another molecule of Compound (1), enabling Compound (5) to be obtained to a high selectivity. When a disiloxane compound is prepared by the hydrolytic condensation of an alkoxysilane compound, an alcohol forms due to a hydrolysis reaction at the Si-O bond. However, when a disiloxane compound is prepared by the hydrolytic condensation of a cyclic silazane compound such as Compound (1), because hydrolysis at a Si-N bond proceeds more rapidly than hydrolysis at a Si-O bond, alcohol formation can be suppressed. In addition, the disiloxane compound that forms due to the hydrolytic condensation of a cyclic silazane compound is a secondary aminosiloxane. Hence, following treatment of a substrate or the like with the disiloxane compound, the amino group can be modified.

In above general formulas (1) and (5), R¹ and R² are each independently a substituted or unsubstituted monovalent hydrocarbon group of 1 to 10 carbon atoms, preferably 1 to 5 carbon atoms, and more preferably 1 to 3 carbon atoms.

The monovalent hydrogen groups of R¹ and R² may be linear, branched or cyclic. Specific examples include linear alkyl groups such as methyl, ethyl, n-propyl, n-butyl, n-pentyl, n-hexyl, n-heptyl, n-octyl, n-nonyl and n-decyl groups; branched alkyl groups such as isopropyl, isobutyl, sec-butyl, tert-butyl, isopentyl, neopentyl, isohexyl, isoheptyl, isooctyl, tert-octyl, isononyl and isodecyl groups; cyclic alkyl groups such as cyclopentyl and cyclohexyl groups; alkenyl groups such as vinyl, allyl, butenyl and methallyl groups; aryl groups such as phenyl, tolyl and xylyl groups; and aralkyl groups such as benzyl and phenethyl groups.

Of these, R¹ and R² are preferably substituted or unsubstituted linear, branched or cyclic alkyl groups or alkenyl groups of 1 to 5 carbon atoms, aryl groups or aralkyl groups. From the standpoint of the availability of the starting materials, unsubstituted linear alkyl groups or alkenyl groups of 1 to 3 carbon atoms is more preferred; methyl and ethyl groups are even more preferred.

Some or all of the hydrogen atoms on these monovalent hydrocarbon groups may be replaced with other substituents. Examples of these substituents include alkoxy groups such as methoxy, ethoxy, and propoxy groups; halogen atoms such as fluorine, chlorine and bromine; aromatic hydrocarbon groups such as the phenyl group; and cyano, amino, ester, ether, carbonyl, acyl and sulfide groups. One of these may be used alone or two or more may be used in combination. The substitution sites for these substituents are not particularly limited, and the number of substituents also is not limited.

In general formulas (1) and (5), R³ is an unsubstituted divalent hydrocarbon group of 1 to 10 carbon atoms, preferably 1 to 5 carbon atoms, and more preferably 2 to 4 carbon atoms, which may include a nitrogen atom or a sulfur atom.

The divalent hydrocarbon group of R³ may be linear, branched or cyclic. Specific examples include alkylene groups such as methylene, ethylene, trimethylene, propylene, tetramethylene and isobutylene groups.

The divalent hydrocarbon group of R³ may have one or more ether group, ester group, carbonyl group, sulfide group, disulfide group or the like interposed on the molecular chain.

Of these, R³ is preferably an unsubstituted linear alkylene group of 3 or 4 carbon atoms. In particular, from the standpoint of the availability of the starting materials, a trimethylene group is more preferred.

In general formulas (1) and (5), R⁴ is a substituted or unsubstituted monovalent hydrocarbon group of 1 to 20 carbon atoms, a substituent of general formula (2) below, a substituent of general formula (3) below or a substituent of general formula (4) below.

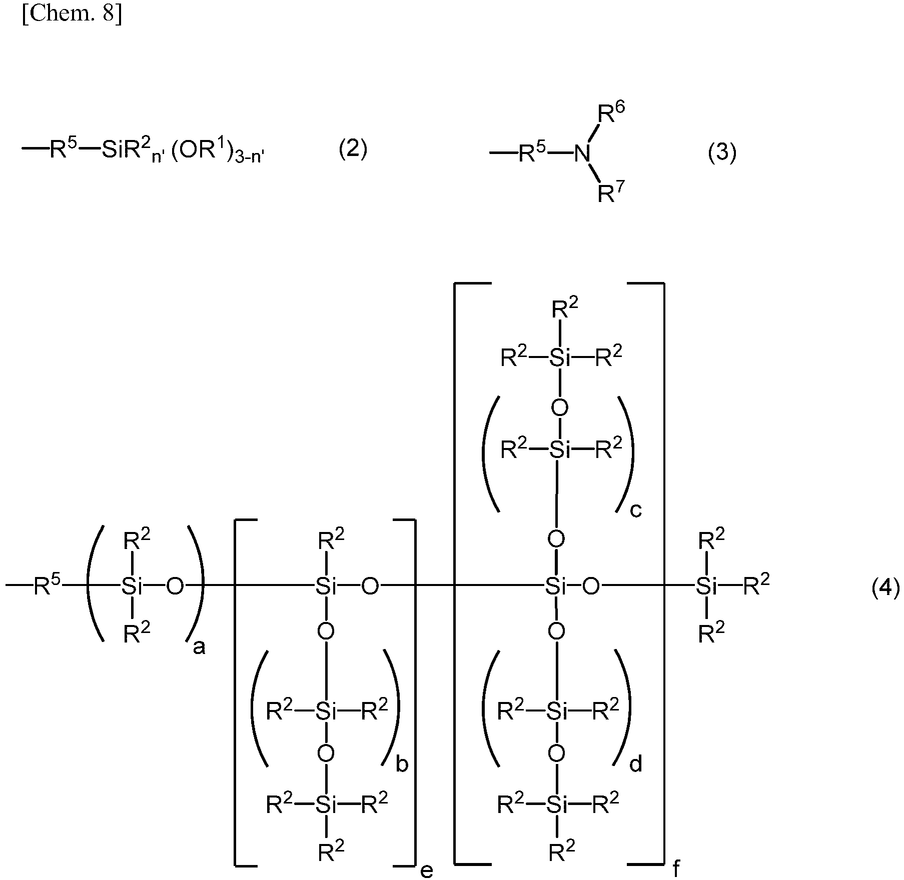

In general formulas (1) and (5), R⁴ is a substituted or unsubstituted monovalent hydrocarbon group of 1 to 20 carbon atoms, preferably 1 to 16 carbon atoms, and more preferably 1 to 14 carbon atoms.

The monovalent hydrocarbon group of R⁴ may be linear, branched or cyclic. Specific examples include linear alkyl groups such as methyl, ethyl, n-propyl, n-butyl, n-pentyl, n-hexyl, n-heptyl, n-octyl, n-nonyl, n-decyl, n-undecyl, n-dodecyl, n-tridecyl, n-tetradecyl, n-pentadecyl n-hexadecyl, n-heptadecyl, n-octadecyl, n-nonadecyl and n-icosyl groups; branched alkyl groups such as isopropyl, isobutyl, sec-butyl, tert-butyl, isopentyl, neopentyl, isohexyl, isoheptyl, isooctyl, tert-octyl, isononyl, isodecyl, isoundecyl, isododecyl, isotridecyl, isotetradecyl, isopentadecyl, isohexadecyl, isoheptadecyl, isooctadecyl, isononadecyl and isoicosyl groups; cyclic alkyl groups such as cyclopentyl and cyclohexyl groups; alkenyl groups such as vinyl, allyl, butenyl and methallyl groups; aryl groups such as phenyl, tolyl and xylyl groups; and aralkyl groups such as benzyl and phenethyl groups.

Of these, R⁴ is preferably a substituted or unsubstituted linear, branched or cyclic alkyl group, an alkenyl group, an aryl group or an aralkyl group of 1 to 16 carbon atoms. Particularly from the standpoint of the availability of the starting materials, unsubstituted linear alkyl group, alkenyl group, aryl groups or aralkyl group of 1 to 12 carbon atoms is more preferred.

Some or all of the hydrogen atoms on the monovalent hydrocarbon group of R⁴ may be replaced with other substituents. These substituents are exemplified by the same substituents as mentioned above in connection with R¹ and R².

In above general formula (2), R⁵ is an unsubstituted divalent hydrocarbon group of 1 to 10 carbon atoms, preferably 1 to 5 carbon atoms, and more preferably 2 to 4 carbon atoms.

The divalent hydrocarbon group of R⁵ is exemplified by the same substituents as mentioned above in connection with R³.

Of these, R⁵ is preferably an unsubstituted linear alkylene group of 1 to 5 carbon atoms. Particularly from the standpoint of the availability of the starting materials, ethylene, trimethylene and tetramethylene groups are more preferred.

Also, n' is an integer from 0 to 2, and is preferably 0 or 1.

Specific examples of the substituent represented by general formula (2) include trimethoxysilylmethyl, trimethoxysilylethyl, trimethoxysilylpropyl, trimethoxysilylbutyl, trimethoxysilylpentyl, trimethoxysilylhexyl, trimethoxysilylheptyl, trimethoxysilyloctyl, trimethoxysilylnonyl, trimethoxysilyldecyl, triethoxysilylethyl, triethoxysilylpropyl, triethoxysilylbutyl, methyldimethoxysilylethyl, methyldimethoxysilylpropyl, methyldimethoxysilylbutyl, ethyldiethoxysilylethyl, ethyldiethoxysilylpropyl, ethyldiethoxysilylbutyl, dimethylmethoxysilylethyl, dimethylmethoxysilylpropyl, dimethylmethoxysilylbutyl, diethylethoxysilylethyl, diethylethoxysilylpropyl and diethylethoxysilylbutyl groups.

Of these, from the standpoint of the availability of the starting materials, the substituent represented by general formula (2) is preferably a trimethoxysilylpropyl group, triethoxysilylpropyl group, methyldimethoxysilylpropyl group or ethyldiethoxysilylpropyl group.

In above general formula (3), R⁶ represents a substituted or unsubstituted monovalent hydrocarbon group of 1 to 10 carbon atoms, preferably 1 to 8 carbon atoms, and more preferably 1 to 6 carbon atoms, which may include a nitrogen atom or an oxygen atom.

The monovalent hydrocarbon group of R⁶ is exemplified by the same substituents as mentioned above in connection with R¹ and R².

Of these, R⁶ is preferably a substituted or unsubstituted linear, branched or cyclic alkyl group, an alkenyl group or an aryl group of 1 to 6 carbon atoms, or an aralkyl group. Particularly from the standpoint of the availability of the starting materials, an unsubstituted linear alkyl group or an alkenyl group of 1 to 6 carbon atoms is more preferred.

Some or all of the hydrogen atoms on the monovalent hydrocarbon group of R⁶ may be replaced with other substituents, these substituents being exemplified by the same groups as the other substituents mentioned above in connection with R¹ and R².

The monovalent hydrocarbon group of R⁶ may include a nitrogen atom or oxygen atom on the molecular chain. Specifically, one or more ether group, ester group, carbonyl group, amino group, amide group or the like may be interposed on the molecular chain.

In general formula (3), R⁷ is a hydrogen atom, an oxy radical, a hydroxyl group, an unsubstituted alkoxy group of 1 to 10 carbon atoms, or a substituted or unsubstituted monovalent hydrocarbon group of 1 to 10 carbon atoms, preferably 1 to 8 carbon atoms, and more preferably 1 to 6 carbon atoms, which may include a nitrogen atom or an oxygen atom.

The alkoxy group of R⁷ may be linear, branched or cyclic. Specific examples include linear alkoxy groups such as methoxy, ethoxy, n-propoxy, n-butoxy, n-pentyloxy, n-hexyloxy, n-heptyloxy, n-octyloxy, n-nonyloxy and n-decyloxy groups; branched alkoxy groups such as sec-propoxy, sec-butoxy, tert-butoxy, sec-pentyloxy, tert-pentyloxy, sec-hexyloxy, tert-hexyloxy, sec-heptyloxy, tert-heptyloxy, sec-octyloxy, tert-octyloxy, sec-nonyloxy, tert-nonyloxy, sec-decyloxy and tert-decyloxy groups; cyclic alkoxy groups such as cyclopentyloxy and cyclohexyloxy groups; alkenyloxy groups such as vinyloxy, allyloxy, butenyloxy and methallyloxy groups; aryloxy groups such as phenyloxy, tolyloxy and xylyloxy groups; and aralkyloxy groups such as benzyloxy and phenethyloxy groups.

The monovalent hydrocarbon group of R⁷ is exemplified by the same groups as mentioned above for R¹ and R².

Of these, R⁷ is preferably a hydrogen atom, oxy radical, hydroxyl group, unsubstituted linear, branched or cyclic alkoxy group, alkenyloxy group, aryloxy group alkyl group, alkenyl group or aryl group of 1 to 6 carbon atoms, or aralkyloxy group or aralkyl group. Particularly from the standpoint of the availability of the starting materials, a hydrogen atom, oxy radical, hydroxyl group, unsubstituted linear alkoxy group, alkenyloxy group, alkyl group or alkenyl group of 1 to 6 carbon atoms is more preferred.

Some or all of the hydrogen atoms on the monovalent hydrocarbon groups of R⁷ may be replaced with other substituents, these substituents being exemplified by the same groups as the other substituents mentioned above in connection with R¹ and R².

The monovalent hydrocarbon group of R⁷ may include a nitrogen atom or oxygen atom on the molecular chain. Specifically, one or more ether group, ester group, carbonyl group, amino group, amide group or the like may be interposed on the molecular chain.

In general formula (3), R⁵ and R⁶ or R⁶ and R⁷ may mutually bond to form a ring together with the nitrogen atom with which they are bonded, and may form a cyclic structure of general formula (6) or (7) below.

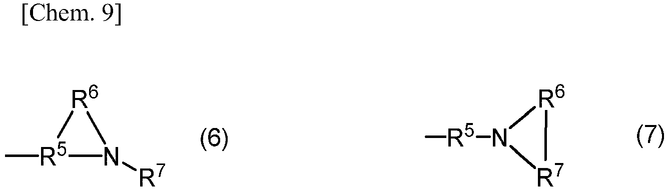

In general formula (6) or (7), the number of carbons included in the ring when R⁵ and R⁶ or R⁶ and R⁷ have formed a ring is preferably from 3 to 6. That is, it is preferable for R⁵ and R⁶ or R⁶ and R⁷ to mutually connect and form a linear alkylene group of 3 to 6 carbon atoms. Also, -O-, -NR- (R being a hydrogen atom or an alkyl group of 1 to 6 carbon atoms) or the like may be included on this alkylene chain. The linear alkylene group of 3 to 6 carbon atoms and the alkyl group of 1 to 6 carbon atoms are exemplified by the same groups as mentioned above in connection with R¹ and R³.

Examples of such cyclic structures include piperidine, pyrrolidine, piperazine, methylpiperazine, tetramethylpiperidine and morpholine rings.

Specific examples of the substituents of general formula (3) include methylaminopropyl, ethylaminopropyl, butylaminopropyl, octylaminopropyl, phenylaminopropyl, benzylaminopropyl, dimethylaminopropyl, diethylaminopropyl, diisopropylaminopropyl, dibutylaminopropyl, dioctylaminopropyl, diphenylaminopropyl, ethylmethylaminopropyl, butylethylaminopropyl, pyrrolidinoethyl, pyrrolidinopropyl, pyrrolidinobutyl, piperidinoethyl, piperidinopropyl, piperidinobutyl, piperazinoethyl, piperazinopropyl, methylpiperazinoethyl, methylpiperazinopropyl, methylpiperazinobutyl, 2,2,6,6-tetramethylpiperidinyl, 1-oxyl-2,2,6,6-tetramethylpiperidinyl, 1-methoxy-2,2,6,6-tetramethylpiperidinyl, 1-ethoxy-2,2,6,6-tetramethylpiperidinyl, 1,2,2,6,6-pentamethylpiperidinyl, morpholinoethyl, morpholinopropyl and morpholinobutyl groups.

Of these, from the standpoint of the availability of the starting materials, the following are preferred as the substituent represented by general formula (3): dimethylaminopropyl, diethylaminopropyl, pyrrolidinoethyl, piperidinoethyl, piperazinoethyl, 2,2,6,6-tetramethylpiperidinyl, 1-methoxy-2,2,6,6-tetramethylpiperidinyl, 1,2,2,6,6-pentamethylpiperidinyl and morpholinoethyl groups.

In above general formula (4), a, b, c, d, e and f are integers which respectively satisfy the conditions 0 ≤ a ≤ 10, 0 ≤ b ≤ 8, 0 ≤ c ≤ 7, 0 ≤ d ≤ 7, 0 ≤ e ≤ 5, 0 ≤ f ≤ 3 and 0 ≤ a + (b+2)e + (c+d+3)f ≤ 10; and preferably satisfy the conditions 0 ≤ a ≤ 5, 0 ≤ b ≤ 3, 0 ≤ c ≤ 2, 0 ≤ d ≤ 2, 0 ≤ e ≤ 2, 0 ≤ f ≤ 1 and 0 ≤ a + (b+2)e + (c+d+3)f ≤ 5. General formula (4) includes a silyl group or siloxane group that satisfies these conditions.

Specific examples of the substituent of general formula (4) include silyl groups such as trimethylsilyl, triethylsilyl, tri-n-propylsilyl, tri-n-butylsilyl, trivinylsilyl, triallylsilyl, triphenylsilyl and tribenzylsilyl groups; and siloxy groups such as pentamethyldisiloxy, heptamethyltrisiloxy, nonamethyltetrasiloxy, undecamethylpentasiloxy, tridecamethylhexasiloxy, pentadecamethylheptasiloxy, heptadecamethyloctasiloxy, nonadecamethylnonasiloxy and henicosamethyldecasiloxy groups.

Of these, from the standpoint of the availability of the starting materials, the following are preferred as the silyl group or siloxy group included in general formula (4): trimethylsilyl, triethylsilyl, pentamethyldisiloxy and heptamethyltrisiloxy groups.

Specific examples of Compound (1) include
2,2-dimethoxy-1-methyl-1-aza-2-silacyclopentane,
2,2-dimethoxy-1-ethyl-1-aza-2-silacyclopentane,
2,2-dimethoxy-1-n-propyl-1-aza-2-silacyclopentane,
2,2-dimethoxy-1-isopropyl-1-aza-2-silacyclopentane,
2,2-dimethoxy-1-n-butyl-1-aza-2-silacyclopentane,
2,2-dimethoxy-1-isobutyl-1-aza-2-silacyclopentane,
2,2-dimethoxy-1-sec-butyl-1-aza-2-silacyclopentane,
2,2-dimethoxy-1-tert-butyl-1-aza-2-silacyclopentane,
2,2-dimethoxy-1-n-pentyl-1-aza-2-silacyclopentane,
2,2-dimethoxy-1-n-hexyl-1-aza-2-silacyclopentane,
2,2-dimethoxy-1-n-heptyl-1-aza-2-silacyclopentane,
2,2-dimethoxy-1-n-octyl-1-aza-2-silacyclopentane,
2,2-dimethoxy-1-n-nonyl-1-aza-2-silacyclopentane,
2,2-dimethoxy-1-n-decyl-1-aza-2-silacyclopentane,
2,2-dimethoxy-1-n-dodecyl-1-aza-2-silacyclopentane,
2,2-dimethoxy-1-n-tetradecyl-1-aza-2-silacyclopentane,
2,2-dimethoxy-1-n-hexadecyl-1-aza-2-silacyclopentane,
2,2-dimethoxy-1-n-octadecyl-1-aza-2-silacyclopentane,
2,2-dimethoxy-1-n-icosyl-1-aza-2-silacyclopentane,
2,2-dimethoxy-1-allyl-1-aza-2-silacyclopentane,
2,2-dimethoxy-1-butenyl-1-aza-2-silacyclopentane,
2,2-dimethoxy-1-octenyl-1-aza-2-silacyclopentane,
2-methoxy-2-methyl-1-phenyl-1-aza-2-silacylcopentane,
2,2-dimethoxy-1-benzyl-1-aza-2-silacyclopentane,
2,2-diethoxy-1-butyl-1-aza-2-silacyclopentane,
2,2-diethoxy-1-allyl-1-aza-2-silacyclopentane,
2,2-diethoxy-1-phenyl-1-aza-2-silacyclopentane,
2-methyl-2-methoxy-1-phenyl-1-aza-2-silacyclopentane,
2-ethyl-2-ethoxy-1-phenyl-1-aza-2-silacyclopentane,
2,2-dimethoxy-1-trimethoxysilylpropyl-1-aza-2-silacyclopentane,
2,2-diethoxy-1-triethoxysilylpropyl-1-aza-2-silacyclopentane,
2,2-dimethoxy-1-dimethylaminopropyl-1-aza-2-silacyclopentane,
2,2-dimethoxy-1-diethylaminopropyl-1-aza-2-silacyclopentane,
2,2-dimethoxy-1-morpholinoethyl-1-aza-2-silacyclopentane,
2,2-dimethoxy-1-piperazinopropyl-1-aza-2-silacyclopentane,
2,2-dimethoxy-1-(4-methylpiperazino)propyl-1-aza-2-silacyclopentane,
2,2-dimethoxy-1-(2,2,6,6-tetramethyl-4-piperidinyl)-1-aza-2-silacyclopentane,
2,2-dimethoxy-1-(1,2,2,6,6-pentamethyl-4-piperidinyl)-1-aza-2-silacyclopentane,
2,2-dimethoxy-1-(1-methoxy-2,2,6,6-tetramethyl-4-piperidinyl)-1-aza-2-silacyclopentane,
2,2-dimethoxy-1-trimethylsilylpropyl-1-aza-2-silacyclopentane,
2,2-dimethoxy-1-triethylsilylpropyl-1-aza-2-silacyclopentane,
2,2-dimethoxy-1-(1,1,1,3,3-pentamethyldisiloxy)propyl-1-aza-2-silacyclopentane and
2,2-dimethoxy-1-(1,1,1,3,5,5,5-heptamethyltrisiloxy)propyl-1-aza-2-silacyclopentane.

Of these, from the standpoint of the availability of the starting materials, the following are preferred: 2,2-dimethoxy-1-n-butyl-1-aza-2-silacyclopentane,
2,2-dimethoxy-1-n-hexyl-1-aza-2-silacyclopentane,
2,2-dimethoxy-1-n-octyl-1-aza-2-silacyclopentane,
2,2-dimethoxy-1-n-decyl-1-aza-2-silacyclopentane,
2,2-dimethoxy-1-n-dodecyl-1-aza-2-silacyclopentane,
2,2-dimethoxy-1-n-tetradecyl-1-aza-2-silacyclopentane,
2,2-dimethoxy-1-allyl-1-aza-2-silacyclopentane,
2,2-dimethoxy-1-octenyl-1-aza-2-silacyclopentane,
2-methoxy-2-methyl-1-phenyl-1-azav2-silacyclopentane,
2,2-dimethoxy-1-benzyl-1-aza-2-silacyclopentane,
2,2-diethoxy-1-butyl-1-aza-2-silacyclopentane,
2,2-diethoxy-1-allyl-1-aza-2-silacyclopentane,
2,2-diethoxy-1-phenyl-1-aza-2-silacyclopentane,
2-methyl-2-methoxy-1-phenyl-1-aza-2-silacyclopentane,
2-ethyl-2-ethoxy-1-phenyl-1-aza-2-silacyclopentane,
2,2-dimethoxy-1-trimethoxysilylpropyl-1-aza-2-silacyclopentane,
2,2-diethoxy-1-triethoxysilylpropyl-1-aza-2-silacyclopentane,
2,2-dimethoxy-1-dimethylaminopropyl-1-aza-2-silacyclopentane,
2,2-dimethoxy-1-diethylaminopropyl-1-aza-2-silacyclopentane,
2,2-dimethoxy-1-morpholinoethyl-1-aza-2-silacyclopentane and
2,2-dimethoxy-1-(1,2,2,6,6-pentamethyl-4-piperidinyl)-1-aza-2-silacyclopentane.

Specific examples of Compound (5) include
1,3-bis(N-methyl-3-aminopropyl)-1,1,3,3-tetramethoxydisiloxane,
1,3-bis(N-ethyl-3-aminopropyl)-1,1,3,3-tetramethoxydisiloxane,
1,3-bis(N-n-propyl-3-aminopropyl)-1,1,3,3-tetramethoxydisiloxane,
1,3-bis(N-isopropyl-3-aminopropyl)-1,1,3,3-tetramethoxydisiloxane,
1,3-bis(N-n-butyl-3-aminopropyl)-1,1,3,3-tetramethoxydisiloxane,
1,3-bis(N-isobutyl-3-aminopropyl)-1,1,3,3-tetramethoxydisiloxane,
1,3-bis(N-sec-butyl-3-aminopropyl)-1,1,3,3-tetramethoxydisiloxane,
1,3-bis(N-tert-butyl-3-aminopropyl)-1,1,3,3-tetramethoxydisiloxane,
1,3-bis(N-n-pentyl-3-aminopropyl)-1,1,3,3-tetramethoxydisiloxane,
1,3-bis(N-n-hexyl-3-aminopropyl)-1,1,3,3-tetramethoxydisiloxane,
1,3-bis(N-n-heptyl-3-aminopropyl)-1,1,3,3-tetramethoxydisiloxane,
1,3-bis(N-n-octyl-3-aminopropyl)-1,1,3,3-tetramethoxydisiloxane,
1,3-bis(N-n-nonyl-3-aminopropyl)-1,1,3,3-tetramethoxydisiloxane,
1,3-bis(N-n-decyl-3-aminopropyl)-1,1,3,3-tetramethoxydisiloxane,
1,3-bis(N-n-dodecyl-3-aminopropyl)-1,1,3,3-tetramethoxydisiloxane,
1,3-bis(N-n-tetradecyl-3-aminopropyl)-1,1,3,3-tetramethoxydisiloxane,
1,3-bis(N-n-hexadecyl-3-aminopropyl)-1,1,3,3-tetramethoxydisiloxane,
1,3-bis(N-n-octadecyl-3-aminopropyl)-1,1,3,3-tetramethoxydisiloxane,
1,3-bis(N-n-icosyl-3-aminopropyl)-1,1,3,3-tetramethoxydisiloxane,
1,3-bis(N-allyl-3-aminopropyl)-1,1,3,3-tetramethoxydisiloxane,
1,3-bis(N-butenyl-3-aminopropyl)-1,1,3,3-tetramethoxydisiloxane,
1,3-bis(N-octenyl-3-aminopropyl)-1,1,3,3-tetramethoxydisiloxane,
1,3-bis(N-phenyl-3-aminopropyl)-1,1,3,3-tetramethoxydisiloxane,
1,3-bis(N-benzyl-3-aminopropyl)-1,1,3,3-tetramethoxydisiloxane,
1,3-bis(N-n-butyl-3-aminopropyl)-1,1,3,3-tetraethoxydisiloxane,
1,3-bis(N-allyl-3-aminopropyl)-1,1,3,3-tetraethoxydisiloxane,
1,3-bis(N-phenyl-3-aminopropyl)-1,1,3,3-tetraethoxydisiloxane,
1,3-bis(N-phenyl-3-aminopropyl)-1,3-dimethyl-1,3-dimethoxydisiloxane,
1,3-bis(N-phenyl-3-aminopropyl)-1,3-diethyl-1,3-diethoxydisiloxane,
1,3-bis(N-trimethoxysilylpropyl-3-aminopropyl)-1,1,3,3-tetramethoxydisiloxane,
1,3-bis(N-triethoxysilylpropyl-3-aminopropyl)-1,1,3,3-tetraethoxydisiloxane,
1,3-bis(N-dimethylaminopropyl-3-aminopropyl)-1,1,3,3-tetramethoxydisiloxane,
1,3-bis(N-diethylaminopropyl-3-aminopropyl)-1,1,3,3-tetramethoxydisiloxane,
1,3-bis(N-morpholinoethyl-3-aminopropyl)-1,1,3,3-tetramethoxydisiloxane,
1,3-bis(N-piperazinopropyl-3-aminopropyl)-1,1,3,3-tetramethoxydisiloxane,
1,3-bis[N-(4-methylpiperazino)-3-aminopropyl]-1,1,3,3-tetramethoxydisiloxane,
1,3-bis[N-(2,2,6,6-tetramethyl-4-piperidinyl)-3-aminopropyl]-1,1,3,3-tetramethoxydisiloxane,
1,3-bis[N-(1,2,2,6,6-pentamethyl-4-piperidinyl)-3-aminopropyl]-1,1,3,3-tetramethoxydisiloxane,
1,3-bis[N-(1-methoxy-2,2,6,6-tetramethyl-4-piperidinyl)-3-aminopropyl]-1,1,3,3-tetramethoxydisiloxane,
1,3-bis(N-trimethylsilylpropyl-3-aminopropyl)-1,1,3,3-tetramethoxydisiloxane,
1,3-bis(N-triethylsilylpropyl-3-aminopropyl)-1,1,3,3-tetramethoxydisiloxane,
1,3-bis[N-(1,1,1,3,3-pentamethyldisiloxy)-3-aminopropyl]-1,1,3,3-tetramethoxydisiloxane and
1,3-bis[N-(1,1,1,3,5,5,5-heptamethyltrisiloxy)-3-aminopropyl]-1,1,3,3-tetramethoxydisiloxane.

Of these, particularly when used as a silane coupling agent or a surface treatment agent from the standpoint of reacting with numerous hydroxyl groups on the surface of a substrate and increasing adhesion and from the standpoint of the availability of the starting materials, the following are preferred:
1,3-bis(N-n-butyl-3-aminopropyl)-1,1,3,3-tetramethoxydisiloxane,
1,3-bis(N-n-hexyl-3-aminopropyl)-1,1,3,3-tetramethoxydisiloxane,
1,3-bis(N-n-octyl-3-aminopropyl)-1,1,3,3-tetramethoxydisiloxane,
1,3-bis(N-n-decyl-3-aminopropyl)-1,1,3,3-tetramethoxydisiloxane,
1,3-bis(N-n-dodecyl-3-aminopropyl)-1,1,3,3-tetramethoxydisiloxane,
1,3-bis(N-n-tetradecyl-3-aminopropyl)-1,1,3,3-tetramethoxydisiloxane,
1,3-bis(N-allyl-3-aminopropyl)-1,1,3,3-tetramethoxydisiloxane,
1,3-bis(N-octenyl-3-aminopropyl)-1,1,3,3-tetramethoxydisiloxane,
1,3-bis(N-phenyl-3-aminopropyl)-1,1,3,3-tetramethoxydisiloxane,
1,3-bis(N-benzyl-3-aminopropyl)-1,1,3,3-tetramethoxydisiloxane,
1,3-bis(N-n-butyl-3-aminopropyl)-1,1,3,3-tetraethoxydisiloxane,
1,3-bis(N-allyl-3-aminopropyl)-1,1,3,3-tetraethoxydisiloxane and
1,3-bis(N-phenyl-3-aminopropyl)-1,1,3,3-tetraethoxydisiloxane.

In the preparation method of the invention, the relative proportions of Compound (1) and water during hydrolytic condensation are not particularly limited. However, from the standpoints of reactivity and productivity, the amount of water included per mole of Compound (1) is preferably from 0.1 to 10 moles, more preferably from 0.1 to 5 moles, and even more preferably from 0.1 to 2 moles.

The hydrolytic condensation reaction proceeds even in the absence of a solvent, although a solvent may be used to increase the reactivity and selectivity. The solvent is not particularly limited so long as it is a solvent in which water uniformly disperses. Examples include ketone-type solvents such as acetone and isobutyl ketone; ether-type solvents such as diethyl ether, tetrahydrofuran and dioxane; ester-type solvents such as ethyl acetate and butyl acetate; and aprotic polar solvents such as acetonitrile and N,N-dimethylformamide. These solvents may be used singly or two or more may be used in combination.

Of these, from the standpoint of availability, acetone, tetrahydrofuran and acetonitrile are especially preferred.

The above hydrolytic condensation reaction proceeds even in the absence of a solvent, although an acid catalyst or a basic catalyst may be suitably selected in order to increase the reactivity and selectivity.

Specific examples of acid catalysts include inorganic acids such as hydrochloric acid sulfuric acid, nitric acid and phosphoric acid; carboxylic acid compounds such as acetic acid, propionic acid, butanoic acid, pentanoic acid, hexanoic acid, oxalic acid malonic acid and succinic acid; and sulfonic acid compounds such as methanesulfonic acid, trifluoromethanesulfonic acid, benzenesulfonic acid, p-toluenesulfonic acid and dodecylbenzenesulfonic acid.

Of these, particularly from the standpoint of availability and reactivity, hydrochloric acid, acetic acid and methanesulfonic acid are preferred.

These acid catalysts may be used as, for example, an aqueous solution or an alcohol solution.

Specific examples of basic catalysts include alkali metal hydroxides such as potassium hydroxide, sodium hydroxide and cesium hydroxide; alkali metal alkoxides such as potassium methoxide, sodium methoxide, potassium ethoxide and sodium ethoxide; alkyl or aryl group-containing quaternary ammonium hydroxide compounds such as tetramethylammonium hydroxide, tetraethylammonium hydroxide, tetrapropylammonium hydroxide, tetrabutylammonium hydroxide and trimethylbenzylammonium hydroxide; alkylamine compounds such as triethylamine, tributylamine, trioctylamine and diisopropylethylamine; and cyclic amidine compounds such as 1,5-diazabicyclo[4.3.0]-5-nonene and 1,8-diazabicyclo[5.4.0]-7-undecene.

Of these, especially from the standpoint of availability and reactivity, alkali metal hydroxides, triethylamine and 1,8-diazabicyclo[5.4.0]-7-undecene are preferred.

These basic catalysts may be used as, for example, an aqueous solution or an alcohol solution.

These catalysts are used in an amount which is not particularly limited so long as it is an amount that exhibits a catalytic effect. However, from the standpoints of reactivity and productivity, the amount of basic catalyst or acid catalyst per mole of Compound (1) is preferably within the range of 0.000001 to 1 mole, more preferably within the range of 0.00001 to 0.1 mole, and even more preferably within the range of 0.0001 to 0.01 mole.

The temperature of the above reaction is not particularly limited, but is preferably within the range of 0 to 200°C, more preferably within the range of 10 to 100°C, and even more preferably within the range of 20 to 60°C.

The reaction time also is not particularly limited, but is preferably from 0.5 to 30 hours, more preferably from 0.5 to 20 hours, and even more preferably from 0.5 to 10 hours.

### EXAMPLES

Examples and Comparative Examples are given below by way of illustration, although the invention is not limited by these Examples.

Compositional analyses of the reaction mixtures in the Examples below were carried out by gas chromatography and gel permeation chromatography under the following conditions.

### [Gas Chromatography Conditions]

| | |
|---|---|
| Gas Chromatograph: | GC-2014 (Shimadzu Corporation) |
| Packed Column: | Silicone SE-30 (GL Sciences Inc.) |
| Detector: | TCD |
| Detector Temperature: | 300°C |
| Injection Port Temperature: | 300°C |
| Temperature Program: | 70°C (0 min) → 10°C/min → 300°C (12 min) |
| Carrier Gas: | helium (50 mL/min) |
| Amount of Sample Injected: | 1 µL |

### [Gel Permeation Chromatography]

| | |
|---|---|
| Gel Permeation Chromatograph: | HLC-8420GPC (Tosoh Corporation) |
| Column: | Shodex GPC KF-402HQ (Showa Denko KK) |
| Guard Column: | Shodex GPC KF-G (Showa Denko KK) |
| Detector: | UV |
| Column Oven Temperature: | 40°C |
| Eluant: | Tetrahydrofuran |
| Flow Rate: | 0.35 mL/min |
| Amount of Sample Injected: | 10 µL |
| Sample Concentration: | 0.1 wt% |

### [Example 1] Preparation of 1,3-Bis(N-butyl-3-aminopropyl)-1,1,3,3-tetramethoxydisiloxane

A flask equipped with a stirrer, a reflux condenser and a thermometer was charged with 5.1 g (0.025 mol) of 2,2-dimethoxy-1-butyl-1-aza-2-silacyclopentane and 0.225 g (0.0125 mol) of water, and the contents were stirred at room temperature for 1 hour.

The resulting reaction mixture was subjected to gel permeation chromatography, and the yield of disiloxane compound calculated from the UV area ratio was 60.2%. The reaction mixture was also subjected to gas chromatography, and the amount of methanol evolution calculated from those results was 0.0002 mole.

The mass spectrum of the resulting compound was measured.

### [Mass Spectrum]

| | | | | | | | |
|---|---|---|---|---|---|---|---|
| m/z | 424 | 317 | 264 | 225 | 204 | 167 | 86 |

Based on the above results, the compound obtained was confirmed to be 1,3-bis(N-butyl-3-aminopropyl)-1,1,3,3-tetramethoxydisiloxane.

### [Example 2] Preparation of 1,3-Bis(N-butyl-3-aminopropyl)-1,1,3,3-tetramethoxydisiloxane

A flask equipped with a stirrer, a reflux condenser and a thermometer was charged with 5.1 g (0.025 mol) of 2,2-dimethoxy-1-butyl-1-aza-2-silacyclopentane, 0.225 g (0.0125 mol) of water and 15 mL of tetrahydrofuran, and the contents were stirred at room temperature for 1 hour.

The resulting reaction mixture was subjected to gel permeation chromatography, and the yield of disiloxane compound calculated from the UV area ratio was 69.7%. The reaction mixture was also subjected to gas chromatography, and the amount of methanol evolution calculated from those results was 0.0002 mole.

The mass spectrum of the resulting compound was measured.

### [Mass Spectrum]

| | | | | | | | |
|---|---|---|---|---|---|---|---|
| m/z | 424 | 317 | 264 | 225 | 204 | 167 | 86 |

Based on the above results, the compound obtained was confirmed to be 1,3-bis(N-butyl-3-aminopropyl)-1,1,3,3-tetramethoxydisiloxane.

### [Example 3] Preparation of 1,3-Bis(N-butyl-3-aminopropyl)-1,1,3,3-tetramethoxydisiloxane

A flask equipped with a stirrer, a reflux condenser and a thermometer was charged with 5.1 g (0.025 mol) of 2,2-dimethoxy-1-butyl-1-aza-2-silacyclopentane, 0.225 g (0.0125 mol) of water, 0.0015 g (0.000025 mol) of acetic acid and 15 mL of tetrahydrofuran, and the contents were stirred at room temperature for 30 minutes.

The resulting reaction mixture was subjected to gel permeation chromatography, and the yield of disiloxane compound calculated from the UV area ratio was 72.8%. The reaction mixture was also subjected to gas chromatography, and the amount of methanol evolution calculated from those results was 0.0001 mole.

The mass spectrum of the resulting compound was measured.

### [Mass Spectrum]

| | | | | | | | |
|---|---|---|---|---|---|---|---|
| m/z | 424 | 317 | 264 | 225 | 204 | 167 | 86 |

Based on the above results, the compound obtained was confirmed to be 1,3-bis(N-butyl-3-aminopropyl)-1,1,3,3-tetramethoxydisiloxane.

### [Example 4] Preparation of 1,3-Bis(N-phenyl-3-aminopropyl)-1,1,3,3-tetramethoxydisiloxane

A flask equipped with a stirrer, a reflux condenser and a thermometer was charged with 167.7 g (0.75 mol) of 2,2-dimethoxy-1-phenyl-1-aza-2-silacyclopentane, 0.0114 g (0.000075 mol) of 1,8-diazabicyclo[5.4.0]-7-undecene, 67.5 g (3.75 mol) of water and 900 mL of tetrahydrofuran, and the contents were stirred at room temperature for 2 hours.

The resulting reaction mixture was subjected to gel permeation chromatography, and the yield of disiloxane compound calculated from the UV area ratio was 82.3%. The reaction mixture was also subjected to gas chromatography, and the amount of methanol evolution calculated from those results was 0.008 mole.

The mass spectrum of the resulting compound was measured.

### [Mass Spectrum]

| | | | | | | | |
|---|---|---|---|---|---|---|---|
| m/z | 464 | 400 | 359 | 327 | 298 | 266 | 106 |

Based on the above results, the compound obtained was confirmed to be 1,3-bis(N-phenyl-3-aminopropyl)-1,1,3,3-tetramethoxydisiloxane.

### [Example 5] Preparation of 1,3-Bis(N-phenyl-3-aminopropyl)-1,3-dimethyl-1,3-dimethoxydisiloxane

A flask equipped with a stirrer, a reflux condenser and a thermometer was charged with 5.2 g (0.025 mol) of 2-methyl-2-methoxy-1-phenyl-1-aza-2-silacyclopentane, 0.225 g (0.0125 mol) of water and 15 mL of tetrahydrofuran, and the contents were stirred at room temperature for 7 hours.

The resulting reaction mixture was subjected to gel permeation chromatography, and the yield of disiloxane compound calculated from the UV area ratio was 83.0%. The reaction mixture was also subjected to gas chromatography, and the amount of methanol evolution calculated from those results was 0.0002 mole.

The mass spectrum of the resulting compound was measured.

### [Mass Spectrum]

| | | | | | | | | |
|---|---|---|---|---|---|---|---|---|
| m/z | 432 | 400 | 369 | 327 | 295 | 266 | 149 | 106 |

Based on the above results, the compound obtained was confirmed to be 1,3-bis(N-phenyl-3-aminopropyl)-1,3-dimethyl-1,3-dimethoxydisiloxane.

### [Example 6] Preparation of 1,3-Bis(N-triethoxysilylpropyl-3-aminopropyl)-1,1,3,3-tetraethoxydisiloxane

A flask equipped with a stirrer, a reflux condenser and a thermometer was charged with 9.5 g (0.025 mol) of 2,2-diethoxy-1-triethoxysilylpropyl-1-aza-2-silacyclopentane and 0.225 g (0.0125 mol) of water, and the contents were stirred at room temperature for 5 hours.

The resulting reaction mixture was subjected to gel permeation chromatography, and the yield of disiloxane compound calculated from the UV area ratio was 76.8%. The reaction mixture was also subjected to gas chromatography, and the amount of ethanol evolution calculated from those results was 0.0002 mole.

The mass spectrum of the resulting compound was measured.

### [Mass Spectrum]

| | | | | | | | | |
|---|---|---|---|---|---|---|---|---|
| m/z | 776 | 685 | 539 | 493 | 292 | 234 | 188 | 144 |

Based on the above results, the compound obtained was confirmed to be 1,3-bis(N-triethoxysilylpropyl-3-aminopropyl)-1,1,3,3-tetraethoxydisiloxane.

### [Example 7] Preparation of 1,3-Bis(N-morpholinoethyl-3-aminopropyl)-1,1,3,3-tetramethoxydisiloxane

A flask equipped with a stirrer, a reflux condenser and a thermometer was charged with 6.5 g (0.025 mol) of 2,2-dimethoxy-1-morpholinoethyl-1-aza-2-silacyclopentane and 0.225 g (0.0125 mol) of water, and the contents were stirred at room temperature for 30 minutes.

The resulting reaction mixture was subjected to gel permeation chromatography, and the yield of disiloxane compound calculated from the UV area ratio was 61.9%. The reaction mixture was also subjected to gas chromatography, and the amount of methanol evolution calculated from those results was 0.0076 mole.

The mass spectrum of the resulting compound was measured.

### [Mass Spectrum]

| | | | | | |
|---|---|---|---|---|---|
| m/z | 406 | 374 | 289 | 100 | 56 |

Based on the above results, the compound obtained was confirmed to be 1,3-bis(N-morpholinoethyl-3-aminopropyl)-1,1,3,3-tetramethoxydisiloxane.

### [Example 8] Preparation of 1,3-Bis[N-[(1,1,1,3,5,5,5-heptamethyltrisiloxy)propyl]-3-aminopropyl]-1,1,3,3-tetramethoxydisiloxane

A flask equipped with a stirrer, a reflux condenser and a thermometer was charged with 10.2 g (0.025 mol) of 2,2-dimethoxy-1-(1,1,1,3,5,5,5-heptamethyltrisiloxy)propyl-1-aza-2-silacyclopentane and 0.225 g (0.0125 mol) of water, and the contents were stirred at room temperature for 2 hours.

The resulting reaction mixture was subjected to gel permeation chromatography, and the yield of disiloxane compound calculated from the UV area ratio was 67.7%. The reaction mixture was also subjected to gas chromatography, and the amount of methanol evolution calculated from those results was 0.0089 mole.

The mass spectrum of the resulting compound was measured.

### [Mass Spectrum]

| | | | | | | | |
|---|---|---|---|---|---|---|---|
| m/z | 523 | 410 | 310 | 264 | 202 | 153 | 73 |

Based on the above results, the compound obtained was confirmed to be 1,3-bis[N-[(1,1,1,3,5,5,5-heptamethyltrisiloxy)propyl]-3-aminopropyl]-1,1,3,3-tetramethoxydisiloxane.

### [Example 9] Preparation of 1,3-Bis(N-triethylsilylpropyl-3-aminopropyl)-1,1,3,3-tetramethoxydisiloxane

A flask equipped with a stirrer, a reflux condenser and a thermometer was charged with 7.6 g (0.025 mol) of 2,2-dimethoxy-1-triethylsilyloctyl-1-aza-2-silacyclopentane and 0.225 g (0.0125 mol) of water, and the contents were stirred at room temperature for 2 hours.

The resulting reaction mixture was subjected to gel permeation chromatography, and the yield of disiloxane compound calculated from the UV area ratio was 60.8%. The reaction mixture was also subjected to gas chromatography, and the amount of methanol evolution calculated from those results was 0.0083 mole.

The mass spectrum of the resulting compound was measured.

### [Mass Spectrum]

| | | | | | | | | |
|---|---|---|---|---|---|---|---|---|
| m/z | 449 | 417 | 264 | 210 | 156 | 115 | 87 | 59 |

Based on the above results, the compound obtained was confirmed to be 1,3-bis(N-triethylsilylpropyl-3-aminopropyl)-1,1,3,3-tetramethoxydisiloxane.

## Claims

1. A method for preparing a disiloxane compound, which method comprises the step of hydrolytically condensing a cyclic silazane compound of general formula (1) below 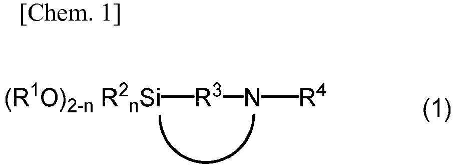
[wherein R¹ and R² are each independently a substituted or unsubstituted monovalent hydrocarbon group of 1 to 10 carbon atoms; R³ is an unsubstituted divalent hydrocarbon group of 1 to 10 carbon atoms which may include a nitrogen atom or a sulfur atom; R⁴ is a substituted or unsubstituted monovalent hydrocarbon group of 1 to 20 carbon atoms, a substituent of general formula (2) below
[Chem. 2]
-R⁵-SiR²_{n'}(OR¹)_{3-n'} (2)
(wherein R¹ and R² are as defined above, R⁵ is an unsubstituted divalent hydrocarbon group of 1 to 10 carbon atoms, and n' is an integer from 0 to 2), a substituent of general formula (3) below 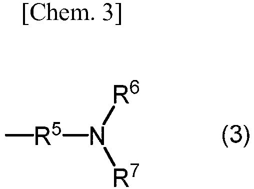
(wherein R⁵ is as defined above; R⁶ is a substituted or unsubstituted monovalent hydrocarbon group of 1 to 10 carbon atoms which may include a nitrogen atom or an oxygen atom; R⁷ is a hydrogen atom, an oxy radical, a hydroxyl group, an unsubstituted alkoxy group of 1 to 10 carbon atoms, or a substituted or unsubstituted monovalent hydrocarbon group of 1 to 10 carbon atoms which may include a nitrogen atom or an oxygen atom; and R⁵ and R⁶ or R⁶ and R⁷ may respectively bond to each other and form a ring together with the nitrogen atom to which they are bonded) or a substituent of general formula (4) below 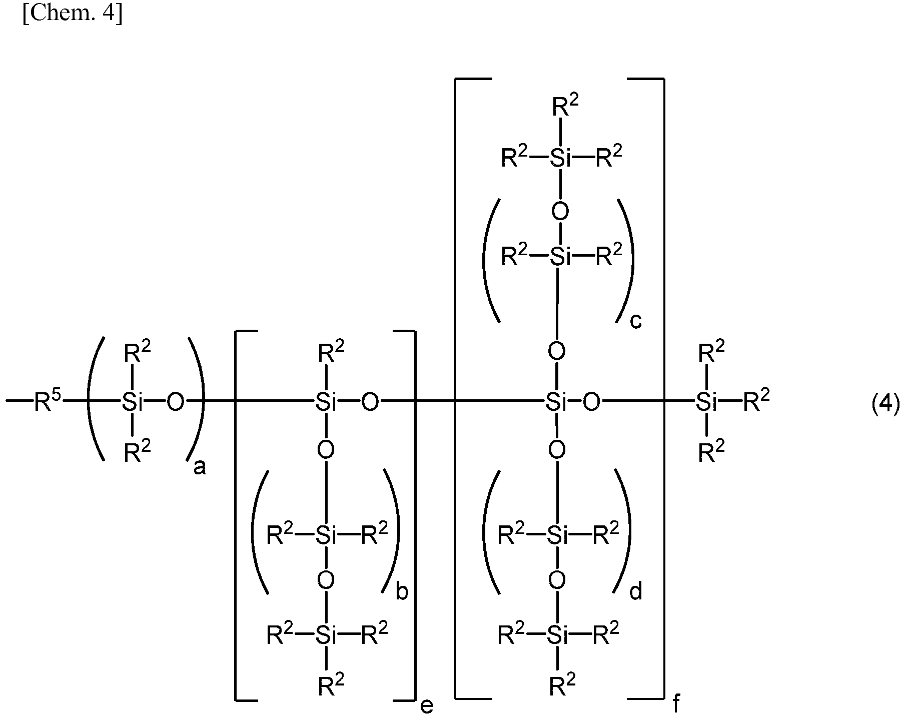
(wherein R² and R⁵ are as defined above and a, b, c, d, e and f are integers which respectively satisfy the conditions 0 ≤ a ≤ 10, 0 ≤ b ≤ 8, 0 ≤ c ≤ 7, 0 ≤ d ≤ 7, 0 ≤ e ≤ 5, 0 ≤ f ≤ 3 and 0 ≤ a + (b+2)e + (c+d+3)f ≤ 10); and
n is 0 or 1]
to form a disiloxane compound of general formula (5) below 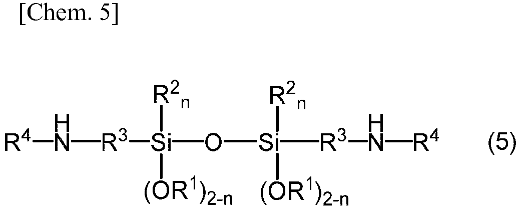
(wherein R¹, R², R³, R⁴ and n are defined above).

2. The method for preparing a disiloxane compound of claim 1, wherein the hydrolytic condensation is carried out within at least one type of solvent selected from the group consisting of ketone solvents, ether solvents, ester solvents and aprotic polar solvents.

3. The method for preparing a disiloxane compound of claim 1 or 2, wherein the hydrolytic condensation is carried out in the presence of at least one type of acid catalyst selected from the group consisting of hydrochloric acid, sulfuric acid, nitric acid, phosphoric acid, carboxylic acid compounds and sulfonic acid compounds.

4. The method for preparing a disiloxane compound of claim 1 or 2, wherein the hydrolytic condensation is carried out in the presence of at least one type of basic catalyst selected from the group consisting of alkali metal hydroxides, alkali metal alkoxides, quaternary ammonium hydroxide compounds, alkylamine compounds and cyclic amidine compounds.
